# EUROPEAN PATENT SPECIFICATION

(11) **EP 2 756 113 B1**
(45) Date of publication and mention of the grant of the patent: **26.06.2019**
(21) Application number: 12761592.0
(22) Date of filing: 13.09.2012
(51) Int. Cl.: C25B 11/03, C25B 11/04, H01M 4/86, H01M 4/88, C25C 7/02

(54) **GAS-DIFFUSION ELECTRODE**
GASDIFFUSIONSELEKTRODE
ÉLECTRODE DE DIFFUSION DE GAZ

(30) Priority: 15.09.2011 US 201161535057 P
(43) Date of publication of application: 23.07.2014
(73) Proprietor: Industrie De Nora S.P.A., 20134 Milano (IT)
(72) Inventor: GULLÁ, Andrea, Francesco, Shaker Heights, OH 44122-6422 (US); KRASOVIC, Julia, Lynne, Fairport Harbor, OH 44077 (US)
(74) Representative: Reitstötter Kinzebach
(86) International application number: PCT/EP2012/067974
(87) International publication number: WO 2013/037902

(56) References cited:
- EP-A1- 1 076 115
- WO-A1-03/023090
- JP-A- 2010 192 219
- US-A- 4 614 575
- US-A- 5 783 325
- US-A1- 2003 162 081
- US-A1- 2006 180 798
- M. F. Mathias ET AL: "Diffusion media materials and characterisation" In: "Handbook of Fuel Cells", 15 December 2010 (2010-12-15), John Wiley & Sons, Ltd, Chichester, UK, XP055192613, ISBN: 978-0-47-097400-1 DOI: 10.1002/9780470974001.f303046,
- "1.2.4 Carbon-Carbon Composites" In: Autar K. Kaw: "Mechanics of Composite Materials, Second Edition", 2 November 2005 (2005-11-02), CRC Press, XP9184588, pages 46-50,

## Description

### FIELD OF THE INVENTION

The invention relates to a gas-diffusion electrode structure suitable as gas-consuming anode or cathode in electrolytic cells.

### BACKGROUND OF THE INVENTION

The use of gas-diffusion electrodes is well known in several electrochemical processes, especially in the field of depolarised electrolysis processes - making use either of hydrogen-consuming anodes or of oxygen-consuming cathodes - and in fuel cell applications. Gas-diffusion electrodes usually consist of a thin porous gas-diffusion layer, equipped with hydrophobic paths for gas transport across its thickness, optionally provided with a catalyst and embedded into or laminated onto current collecting members. Current collecting members may also act as reinforcement members, depending on the final application. Examples of current collecting members are expanded or woven metals, metal foams, woven or stranded carbon or metal cloths or felts, carbon paper. Gas-diffusion layers may consist of porous solid compositions of optionally catalysed conductive powders, for instance metal, oxide or carbon powders, in combination with a binder, usually a plastic material capable of forming suitable networks in which the conductive powders get trapped. Gas-diffusion layers are not self-standing members, thus they are usually formed onto the current collecting member by means of various techniques, e.g. by spraying an aqueous suspension of the component, or by gravure or blade coating of an aqueous slurry or paste. Gas-diffusion layers can also be formed as decals on an inert support which is removed, e.g. by peeling or leaching, after lamination with the current collecting member; separate formation of gas-diffusion layers and subsequent lamination is however a very delicate operation, gas-diffusion layers being usually very thin and brittle and difficult to handle. Gas-diffusion electrodes can have a catalyst incorporated within the gas-diffusion layer, or can be catalysed by applying a suitable catalyst layer on top of the gas-diffusion layer, usually on the side opposite the current-collecting member. This type of construction leads to thin electrode members having a poor dimensional definition and rigidity and which must be adequately supported by suitable spacers and collectors, as known in the art.

Gas-diffusion electrodes can be used to depolarise electrochemical processes; for instance, chlor-alkali electrolysis can be carried out by feeding oxygen to a gas-diffusion cathode rather than by evolving gaseous hydrogen on a metal cathode, with associated energy savings of about 30%. However, an oxygen-consuming cathode in a chlor-alkali cell must face a gas chamber on one side and a liquid electrolyte chamber on the other, where a caustic solution is produced. Known gas-diffusion electrodes could not withstand the hydraulic head of the product caustic solution in electrolysers of industrial size (i.e. with a total height exceeding 30 cm), which can be compensated only to a certain extent by pressurising the gas chamber. The pressure exerted by the liquid column is in fact higher at the bottom than at the top, unless specific countermeasures which complicate the cell design are taken, such as in the cumbersome gas-pocket design of WO 03035939, very expensive and not too reliable, or in percolator-type cells as disclosed in WO 03042430. Percolator members can efficiently break hydraulic heads in liquid chambers, on the other hand being expensive and adding undesired ohmic drops to the cell construction. Percolators consist in fact of porous bodies of a certain minimum thickness filled with liquid electrolyte, acting at the same time as spacers between gas-diffusion electrodes and membrane separators as needed to compensate for the poor dimensional definition and rigidity of gas-diffusion electrodes which make them unsuitable to delimit a finite gap chamber of adequately low thickness.

Also electrometallurgical applications, such as metal electrowinning, could benefit from energy savings associated with process depolarisation, in this case at the anode side: metal electrodeposition is in fact carried out at the cathode side of suitable electrolysers, while oxygen is evolved at the anode. The replacement of oxygen evolution by hydrogen oxidation on a suitable gas-diffusion anode would result in very high energy savings, made difficult however by the mechanical characteristics of known gas-diffusion electrodes which make them unsuitable for delimiting narrow-gap chambers, this limiting their use in undivided electrolysis cells, typical of electrometallurgical processes. Moreover, also in this case known gas-diffusion electrodes would not be capable of withstanding the hydraulic head of electrolytic solutions commonly used in industrial size electrolysers.

It would therefore be desirable to provide a gas-diffusion electrode of improved mechanical characteristics, suitable to operate as a self-standing member having low construction tolerances and a sufficient stiffness to delimit a narrow gap chamber of an electrolysis cell, being able to provide a hydrostatic barrier suitable for withstanding hydraulic heads typical of industrial electrolysers, for instance of 20 kPa or higher.

US 2003/162081 A and M.F. Mathias et al. ("Diffusion media materials and characterisation" in "Handbook of Fuel Cells", 15 December 2010, John Wiley & Sons, Chichester, UK) describe gas-diffusion electrodes comprising a gas-diffusion layer laminated on a reinforcement member, wherein the gas-diffusion layer consists of a sintered and cast conductive powder/fluorinated binder composition.

### SUMMARY OF THE INVENTION

Various aspects of the invention are set out in the accompanying claims.

Under one aspect, the invention relates to a gas-diffusion electrode having a high elastic modulus comprising a gas-diffusion layer laminated on a reinforcement member, in particular a gas-diffusion layer consisting of a sintered and cast conductive powder/fluorinated binder composition, the laminated gas-diffusion layer/reinforcement member assembly having a longitudinal (in-plane) elastic modulus between 15,000 and 120,000 MPa. In one embodiment, the perpendicular (out-of-plane) elastic modulus of the gas-diffusion layer exceeds 500 MPa. The inventors have found that casting a pre-sintered composition containing a fluorinated binder in conditions such that a rubbery gas-diffusion layer is obtained makes gas-diffusion electrodes imparts a high elastic modulus to the resulting electrodes making them capable to withstand extremely high hydraulic heads (for instance hydraulic heads in excess of 20 kPa, such as 80 kPa) and to delimit finite gap chambers in electrolysis cells, with no spacer element in-between. In one embodiment, the reinforcement member of the gas-diffusion electrode is chosen between an expanded or woven metal, metal foam, carbon or metal cloth or felt, all capable to withstand the sintering and casting steps of the manufacturing process. This can have the advantage of further enhancing the stiffness and dimensional definition of the resulting gas-diffusion electrode. In a less preferred embodiment, carbon paper could also be used if manufacturing conditions are appropriately selected. In one embodiment, the sintered and cast composition of the gas-diffusion layer contains a carbon black as the conductive powder, for instance a low surface area carbon black such as Shawinigan acetylene black (SAB). This can have the advantage of providing a suitably compact and conductive layer. In one embodiment, the fluorinated binder in the sintered and cast composition is a perfluorinated binder such as PTFE, FEP or PFA. This can have the advantage of providing a gas-diffusion electrode of enhanced stability in electrolytic environments and of facilitating the achievement of a rubbery gas-diffusion layer at moderate pressure and temperature conditions. In one embodiment, a suitable compromise of mechanical and electrical properties is obtained by setting the weight ratio of carbon powder to fluorinated binder in the sintered and cast composition between 1 and 2. In one embodiment, the gas-diffusion electrode is catalysed by depositing a catalytic layer onto the gas-diffusion layer as hereinbefore described on the side opposite the reinforcement member. Several types of catalytic layer can be coupled to the sintered and cast gas-diffusion layer: in one embodiment, the catalytic layer is obtained as a recast ionomer layer starting from a catalyst powder dispersed in a liquid ionomer suspension or solution. This can have the advantage of imparting ion-conductive and hydrophilic properties to the gas-diffusion electrode, useful in several applications. In another embodiment, the catalyst layer also consists of a sintered and cast composition, such as a sintered and cast carbon-supported catalyst powder/fluorinated binder composition, laminated on the gas-diffusion layer. This can have the advantage of further enhancing the dimensional definition and stiffness of the gas-diffusion electrode.

Under another aspect, the invention relates to a method of manufacturing a gas-diffusion electrode as hereinbefore described, comprising the steps of:
- incorporating a fluorinated binder and a conductive powder in a paste, for instance starting from a fluorinated binder aqueous suspension or emulsion, precipitating the binder with a suitable agent such as a light alcohol and mixing the precipitated binder with a conductive powder, such as a carbon black;
- calendering the paste into thin layers, for instance having a thickness of less than 2 mm and in one embodiment of less than 0.2 mm;
- laminating each layer onto a reinforcement member under a heated press at 100-150°C and under a pressure of 12-24 kPa until obtaining a laminated structure, which in one embodiment can require 15-60 minutes;
- increasing the temperature to 300-400°C and bringing the pressure to 25-50 kPa, until removing the aqueous phase, which in one embodiment can require 15-60 minutes;
- releasing the pressure to atmospheric to induce full sintering under relaxed conditions, which has the advantage of intimately bonding the gas-diffusion layer to the reinforcement and which in one embodiment can require 1-15 minutes;
- casting the sintered structure under a heated press at 300-400°C under a pressure of 30-60 kPa until casting a rubbery gas-diffusion layer and imparting a high longitudinal elastic modulus to the assembly, which in one embodiment can require 15-60 minutes.

Under another aspect, the invention relates to an electrochemical cell of the type comprising a gas chamber and a liquid chamber separated by a gas-diffusion electrode as hereinbefore described; the gas-diffusion electrode may act as gas-diffusion anode over which surface a hydrogen-containing flow is oxidised, or as gas-diffusion cathode over which surface an oxygen-containing flow such as pure oxygen or air is reduced. In one embodiment, a hydraulic head of 20 kPa or more is established in the liquid chamber which the gas-diffusion electrode separates from the gas chamber, taking advantage of the enhanced ability of the gas-diffusion layer to withstand the pressure of a liquid column without getting flooded. The electrolytic cell according to the invention may be a hydrogen-depolarised electrowinning cell, an oxygen-depolarised chlor-alkali cell, an electrodialysis cell for salt splitting depolarised on either or on both sides (i.e. provided with a hydrogen fed gas-diffusion anode and/or an oxygen-fed gas-diffusion cathode as hereinbefore described), but other types of electrolysis cells or fuel cells, such as alkaline fuel cells, can take advantage of the above gas-diffusion electrode as it will be evident to a person skilled in the art.

The following examples are included to demonstrate particular embodiments of the invention, whose practicability has been largely verified in the claimed range of values. It should be appreciated by those of skill in the art that the compositions and techniques disclosed in the examples which follow represent compositions and techniques discovered by the inventors to function well in the practice of the invention; however, those of skill in the art should, in light of the present disclosure, appreciate that many changes can be made in the specific embodiments which are disclosed and still obtain a like or similar result without departing from the scope of the invention.

### EXAMPLE 1

A PTFE aqueous suspension commercialised by DuPont, USA was precipitated into a 50:50 vol. mix of 2-propanol and deionised water. The precipitated PTFE was mechanically mixed to Shawinigan Acetylene Black (SAB) powder, commercialised by Cabot Corp., USA, in a carbon to PTFE weight ratio of 60:40. A material with a dough consistency was obtained and immediately processed via an extruder, using calender rolls, into 10 cm x 10 cm x 0.1 mm layers. Each layer was laminated by means of a heated press on a different sample of woven silver mesh having an aperture width of 0.50 mm, a wire diameter of 0.14 mm and a specific weight of 0.53 kg/m²; the process was carried out in multiple steps, first pressurising the assembly at 17.9 kPa at 120°C for 30 minutes, then bringing the temperature to 335°C and the pressure to 44.8 kPa for 30 more minutes, releasing the pressure and exposing the laminated structure to ambient air for 5 minutes and finally pressurising again the assembly at 34.5 kPa and at 335°C for an additional 30 minutes.

The longitudinal (in-plane) elastic modulus of all samples obtained, as measured by dynamic mechanical analysis (DMA), ranged between 35,000 and 49,000 MPa.

### EXAMPLE 2

The procedure of Example 1 was repeated making use of a 280 µm thick TGP-H-090 carbon paper commercialised by Toray, Japan as the reinforcement member. SAB/PTFE layers were obtained by calendering as in Example 1 and laminated on the respective samples of carbon paper; the process was carried out in multiple steps, first pressurising the assembly at 13.7 kPa at 120°C for 30 minutes, then bringing the temperature to 335°C and the pressure to 27.5 kPa for 30 more minutes, releasing the pressure and exposing the laminated structure to ambient air for 5 minutes and finally pressurising again the assembly at 34.5 kPa and at 335°C for an additional 30 minutes.

The longitudinal (in-plane) elastic modulus of all samples obtained, as measured by dynamic mechanical analysis (DMA), ranged between 16,000 and 23,000 MPa.

### EXAMPLE 3

The procedure of Examples 1 and 2 was repeated making use of a 0.75 mm thick AvCarb™ 1243 carbon cloth commercialised by Textron Systems Corporation, USA as the reinforcement member. SAB/PTFE layers were obtained by calendering as in the previous examples and laminated on the respective samples of carbon paper; the process was carried out in multiple steps, first pressurising the assembly at 20 kPa at 120°C for 30 minutes, then bringing the temperature to 335°C and the pressure to 45.5 kPa for 30 more minutes, releasing the pressure and exposing the laminated structure to ambient air for 5 minutes and finally pressurising again the assembly at 55 kPa and at 335°C for an additional 30 minutes.

The longitudinal (in-plane) elastic modulus of all samples obtained, as measured by dynamic mechanical analysis (DMA), ranged between 45,000 and 73,000 MPa.

### EXAMPLE 4

One gas-diffusion electrode sample obtained in Example 1 on a silver mesh reinforcement member and one gas-diffusion electrode sample obtained in Example 3 on a carbon cloth reinforcement member were tested for permeability under pressure in a lab device obtained from a beaker having an opening with a diameter of 8 cm which was used as pressurising area.

A metal rim and fine mesh was set into the beaker to provide support for the electrode samples. The rim/mesh insert was flush with the beaker rim preventing any significant deflection of the electrode samples, which were placed for the test on the rim of the beaker with a 2 mm rubber gasket interposed. A second beaker was clamped to the top of the assembly, again with a rubber gasket interposed. About 5 cm of water were placed in the top beaker before sealing. Using a vacuum pump, air was removed from the bottom beaker while monitoring the pressure and pausing at increments of about 7 kPa to hold the pressure and check for leakage, up to a maximum pressure of about 80 kPa, which was the maximum value obtainable with the lab device.

The sample of Example 1 (with silver mesh reinforcement) was capable of withstanding a pressure of 20 kPa, while the sample of Example 3 (with carbon cloth reinforcement) did not show any leakage up to the maximum applied pressure of about 80 kPa.

### EXAMPLE 5

A lab electrowinning cell, equipped with a conventional lead-silver (Pb0.75Ag) anode plate and an aluminium cathode plate of 50 cm² active area with a 1 cm gap was tested for zinc deposition from a sulphate electrolyte containing 50 g/l Zn and 170 g/l H₂SO₄ obtained by dissolution of high purity ZnO and reagent grade sulphuric acid in deionised water, according to the following reaction:

2 ZnSO₄ + 2 H₂O → 2 H₂SO₄ + 2 Zn + O₂

The test was carried out at 500 A/m² at a total cell voltage of 3.1 V.

A gas-diffusion electrode was obtained by painting one electrode sample of Example 3 on the face opposite the carbon cloth member with an ink containing a Pt catalyst supported on Vulcan XC-72 carbon black dispersed in a liquid Nafion suspension commercialised by Aldrich, USA. The painted electrode sample was dried at 125°C to recast a catalyst-containing ionomer film on its surface.

The lead-silver anode of the lab electrowinning cell was then replaced with the thus obtained catalysed gas-diffusion electrode mounted in a suitable frame, with the catalysed surface facing the cathode at a 1 cm gap. The gas-diffusion electrode was supplied with pure hydrogen gas from the back side and the zinc electrowinning process was resumed. A cell voltage reduction of 850 mV at a current density of 500 A/m² was observed. The cell could be operated with no problems of short-circuiting overnight.

### EXAMPLE 6

A gas-diffusion electrode was obtained as in Example 1 except that the gas-diffusion layer was co-laminated, on the face opposite the silver mesh member, with a 1 mm-thick catalyst layer obtained by precipitating the same PTFE aqueous suspension into a 50:50 vol. mix of 2-propanol and deionised water, mechanically mixing the precipitated PTFE with a silver powder mechanically alloyed with 5% by weight platinum powder in an Ag-Pt to PTFE weight ratio of 80:20 and extruding the obtained paste with calender rolls. The lamination, sintering and casting steps were carried out as in Example 1 and a gas-diffusion electrode having a longitudinal (in-plane) elastic modulus of 41,000 MPa was obtained.

The obtained electrode was assembled as the gas-diffusion cathode (10) in a lab chlor-alkali cell according to Example 1 and Fig. 1 of WO03042430, free of porous planar element (9), with a cathode (10) to membrane (16) gap of 1 mm. The cell could be operated overnight to produce 32% by weight caustic soda at 400 Amps (4000 A/m²), at a cell voltage of 2.4 V, about 200 mV lower than the best cell voltage obtainable with a gas-diffusion cathode of low elastic modulus according to the prior art and a plastic percolating element interposed between cathode and membrane.

The previous description is not intended to limit the invention, which may be used according to different embodiments without departing from the scopes thereof, and whose extent is univocally defined by the appended claims.

Throughout the description and claims of the present application, the term "comprise" and variations thereof such as "comprising" and "comprises" are not intended to exclude the presence of other elements or additives.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention before the priority date of each claim of this application.

## Claims

1. A gas-diffusion electrode comprising a gas-diffusion layer laminated on a reinforcement member, said gas-diffusion layer consisting of a sintered and cast conductive powder/fluorinated binder composition, **characterised in that** the gas-diffusion layer/reinforcement member assembly has a longitudinal elastic modulus between 15,000 and 120,000 MPa.

2. The gas-diffusion electrode according to claim 1 wherein said reinforcement member is selected from the group consisting of expanded metals, woven metals, metal foams, carbon or metal cloth or felt materials.

3. The gas-diffusion electrode according to any one of the previous claims wherein said conductive powder in said composition is a carbon black.

4. The gas-diffusion electrode according to any one of the previous claims wherein said fluorinated binder in said composition is PTFE, PFA or FEP.

5. The gas-diffusion electrode according to claim 3 or 4 wherein the weight ratio of carbon powder to fluorinated binder in said composition ranges between 1 and 2.

6. The gas-diffusion electrode according to any one of the previous claims further comprising a catalytic layer deposited onto said gas-diffusion layer on the side opposite said reinforcement member.

7. The gas-diffusion electrode according to claim 6 wherein said catalyst layer consists of a recast ionomer layer containing a catalyst powder.

8. The gas-diffusion electrode according to claim 6 wherein said catalyst layer consists of a sintered and cast carbon-supported catalyst powder/fluorinated binder composition laminated on said gas-diffusion layer.

9. A method of manufacturing a gas-diffusion electrode according to any one of claims 1 to 8 comprising the steps of:
a. obtaining a paste comprising a fluorinated binder and a conductive powder
b. calendering said paste into layers of thickness below 2 mm
c. laminating said layers onto a reinforcement member under a heated press at a temperature of 100 to 150°C and a pressure of 12 to 24 kPa to obtain a laminated structure
d. bringing the temperature to 300-400°C and the pressure to 25-50 kPa
e. releasing the pressure to atmospheric and exposing the laminated structure to air to induce sintering
f. casting the sintered structure under a heated press at a temperature of 300 to 400°C and a pressure of 30 to 60 kPa.

10. The method according to claim 9 wherein said steps c, d and f have a duration of 15 to 60 minutes and said exposure to air at atmospheric pressure in step e has a duration of 1 to 15 minutes.

11. An electrochemical cell comprising at least one gas chamber and one liquid chamber separated by a gas-diffusion electrode according to any one of claims 1 to 8, the gas chamber being either an anodic chamber in which a hydrogen flow is oxidised at the surface of said gas-diffusion electrode or a cathodic chamber in which an oxygen flow is reduced at the surface of said gas-diffusion electrode.

12. The electrolytic cell according to claim 11 having a hydraulic head of at least 20 kPa in said liquid chamber.

13. A cell according to claim 11 or 12 selected from the group consisting of hydrogen-depolarised electrowinning cells, oxygen-depolarised chlor-alkali cells, depolarised electrodialysis cells and fuel cells.

## Patentansprüche

1. Gasdiffusionselektrode, umfassend eine Gasdiffusionsschicht, die auf ein Verstärkungselement laminiert ist, wobei die Gasdiffusionsschicht aus einer gesinterten und gegossenen Zusammensetzung von leitfähigem Pulver und fluoriertem Bindemittel besteht, **dadurch gekennzeichnet, dass** die Anordnung von Gasdiffusionsschicht und Verstärkungselement ein longitudinales Elastizitätsmodul zwischen 15.000 und 120.000 MPa aufweist.

2. Gasdiffusionselektrode gemäß Anspruch 1, wobei das Verstärkungselement ausgewählt ist aus der Gruppe bestehend aus Streckmetallen, Metallgeweben, Metallschäumen, Kohlenstoff- oder Metalltuch oder Filzmaterialien.

3. Gasdiffusionselektrode gemäß einem der vorhergehenden Ansprüche, wobei das leitfähige Pulver in der Zusammensetzung ein Ruß ist.

4. Gasdiffusionselektrode gemäß einem der vorhergehenden Ansprüche, wobei das fluorierte Bindemittel in der Zusammensetzung PTFE, PFA oder FEP ist.

5. Gasdiffusionselektrode gemäß Anspruch 3 oder 4, wobei das Gewichtsverhältnis von Kohlenstoffpulver zu fluoriertem Bindemittel in der Zusammensetzung zwischen 1 und 2 liegt.

6. Gasdiffusionselektrode gemäß einem der vorhergehenden Ansprüche, ferner umfassend eine katalytische Schicht, die auf der Gasdiffusionsschicht auf der dem Verstärkungselement gegenüberliegenden Seite abgeschieden ist.

7. Gasdiffusionselektrode gemäß Anspruch 6, wobei die Katalysatorschicht aus einer umgegossenen lonomerschicht besteht, die ein Katalysatorpulver enthält.

8. Gasdiffusionselektrode gemäß Anspruch 6, wobei die Katalysatorschicht aus einer gesinterten und gegossenen kohlenstoffgeträgerten Zusammensetzung von Katalysatorpulver und fluoriertem Bindemittel besteht, die auf die Gasdiffusionsschicht laminiert ist.

9. Verfahren zum Herstellen einer Gasdiffusionselektrode gemäß einem der Ansprüche 1 bis 8, umfassend die Schritte von:
a. Erhalten einer Paste, die ein fluoriertes Bindemittel und ein leitfähiges Pulver umfasst,
b. Kalandrieren der Paste in Schichten mit einer Dicke unter 2 mm,
c. Laminieren der Schichten auf ein Verstärkungselement unter einer beheizten Presse bei einer Temperatur von 100 bis 150°C und einem Druck von 12 bis 24 kPa, um eine laminierte Struktur zu erhalten,
d. Erhöhen der Temperatur auf 300-400°C und des Drucks auf 25-50 kPa,
e. Absenken des Drucks auf Atmosphärendruck und Aussetzen der laminierten Struktur gegenüber Luft, um das Sintern einzuleiten,
f. Gießen der gesinterten Struktur unter einer beheizten Presse bei einer Temperatur von 300 bis 400°C und einem Druck von 30 bis 60 kPa.

10. Verfahren gemäß Anspruch 9, wobei die Schritte c, d und f eine Dauer von 15 bis 60 Minuten aufweisen und das Aussetzen gegenüber Luft bei Atmosphärendruck in Schritt e eine Dauer von 1 bis 15 Minuten aufweist.

11. Elektrochemische Zelle, umfassend zumindest eine Gaskammer und eine Flüssigkeitskammer, die durch eine Gasdiffusionselektrode gemäß einem der Ansprüche 1 bis 8 voneinander getrennt sind, wobei die Gaskammer entweder eine anodische Kammer, in der ein Wasserstoffstrom an der Oberfläche der Gasdiffusionselektrode oxidiert wird, oder eine kathodische Kammer ist, in der ein Sauerstoffstrom an der Oberfläche der Gasdiffusionselektrode reduziert wird.

12. Elektrolysezelle gemäß Anspruch 11 mit einem hydraulischen Druckunterschied von mindestens 20 kPa in der Flüssigkeitskammer.

13. Zelle gemäß Anspruch 11 oder 12, ausgewählt aus der Gruppe bestehend aus wasserstoffdepolarisierten Elektrogewinnungszellen, sauerstoffdepolarisierten Chloralkalizellen, depolarisierten Elektrodialysezellen und Brennstoffzellen.

## Revendications

1. Électrode de diffusion gazeuse comprenant une couche de diffusion gazeuse stratifiée sur un élément de renforcement, ladite couche de diffusion gazeuse étant constituée d'une composition de liant fluoré/poudre conductrice frittée et coulée, **caractérisée en ce que** l'ensemble élément de renforcement/couche de diffusion gazeuse a un module élastique longitudinal compris entre 15 000 et 120 000 MPa.

2. Électrode de diffusion gazeuse selon la revendication 1, dans laquelle ledit élément de renforcement est choisi parmi le groupe constitué de métaux expansés, métaux tissés, mousses métalliques, tissu en carbone ou métal ou des matériaux en feutre.

3. Électrode de diffusion gazeuse selon l'une quelconque des revendications précédentes, dans laquelle ladite poudre conductrice dans ladite composition est du noir de carbone.

4. Électrode de diffusion gazeuse selon l'une quelconque des revendications précédentes, dans laquelle ledit liant fluoré dans ladite composition est du PTFE, PFA ou FEP.

5. Électrode de diffusion gazeuse selon la revendication 3 ou 4, dans laquelle le rapport en poids entre la poudre de carbone et le liant fluoré dans ladite composition est compris entre 1 et 2.

6. Électrode de diffusion gazeuse selon l'une quelconque des revendications précédentes, comprenant en outre une couche catalytique déposée sur ladite couche de diffusion gazeuse sur le côté opposé audit élément de renforcement.

7. Électrode de diffusion gazeuse selon la revendication 6, dans laquelle ladite couche de catalyseur est constituée d'une couche ionomère de refonte contenant une poudre de catalyseur.

8. Électrode de diffusion gazeuse selon la revendication 6, dans laquelle ladite couche de catalyseur est constituée d'une composition de liant fluoré/poudre de catalyseur supportée sur carbone frittée et coulée, stratifiée sur ladite couche de diffusion gazeuse.

9. Procédé de fabrication d'une électrode de diffusion gazeuse selon l'une quelconque des revendications 1 à 8, comprenant les étapes consistant à :
a. obtenir une pâte comprenant un liant fluoré et une poudre conductrice
b. calandrer ladite pâte en couches d'une épaisseur inférieure à 2 mm
c. stratifier lesdites couches sur un élément de renforcement sous une presse chauffée à une température de 100 à 150 °C et une pression de 12 à 24 kPa pour obtenir une structure stratifiée
d. amener la température à 300-400 °C et la pression à 25-50 kPa
e. relâcher la pression jusqu'à la pression atmosphérique et exposer la structure stratifiée à l'air pour induire un frittage
f. couler la structure frittée sous une presse chauffée à une température de 300 à 400 °C et une pression de 30 à 60 kPa.

10. Procédé selon la revendication 9, dans lequel lesdites étapes c, d et f ont une durée de 15 à 60 minutes et ladite exposition à l'air à la pression atmosphérique à l'étape e a une durée de 1 à 15 minutes.

11. Cellule électrochimique comprenant au moins une chambre à gaz et une chambre à liquide séparées par une électrode de diffusion gazeuse selon l'une quelconque des revendications 1 à 8, la chambre à gaz étant une chambre anodique dans laquelle un flux d'hydrogène est oxydé à la surface de ladite électrode de diffusion gazeuse ou une chambre cathodique dans laquelle un flux d'oxygène est réduit à la surface de ladite électrode de diffusion gazeuse.

12. Cellule électrolytique selon la revendication 11, ayant une tête hydraulique d'au moins 20 kPa dans ladite chambre à liquide.

13. Cellule selon la revendication 11 ou 12, choisie parmi le groupe constitué des cellules d'extraction électrolytique dépolarisées par hydrogène, des cellules chlore-alcali dépolarisées par oxygène, des cellules d'électrodialyse dépolarisées et des piles à combustible.
